(19) Europäisches Patentamt
European Patent Office
Office européen des brevets

(11) Publication number: **0 063 092 B1**

(12) **EUROPEAN PATENT SPECIFICATION**

(45) Date of publication of patent specification: **15.05.85**

(51) Int. Cl.[4]: **B 60 C 1/00,** C 08 L 21/00 // (C08L21/00, 65:00)

(21) Application number: **82630031.1**

(22) Date of filing: **06.04.82**

# (54) Pneumatic tire.

(30) Priority: **09.04.81 US 252636**

(43) Date of publication of application: **20.10.82 Bulletin 82/42**

(45) Publication of the grant of the patent: **15.05.85 Bulletin 85/20**

(84) Designated Contracting States: **DE FR GB IT LU**

(56) References cited:
**US-A-3 927 144**

**CHEMICAL ABSTRACTS, volume 90, nr. 8, February 19, 1979, ref. 56115s, page 60, COLUMBUS, OHIO (US)**

(73) Proprietor: **THE GOODYEAR TIRE & RUBBER COMPANY**
**1144 East Market Street**
**Akron, Ohio 44316 (US)**

(72) Inventor: **Scriver, Richard Martin Jr.**
**3096 Alexander Road**
**Atwater Ohio 44201 (US)**

(74) Representative: **Weyland, Joseph Jean Pierre**
**Goodyear International Tire Technical Center**
**Patent Department Avenue Gordon Smith**
**L-7750 Colmar-Berg (LU)**

**EP 0 063 092 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of invention

This invention relates to tires. The invention particularly relates to pneumatic tires having a rubber tread composition.

Background of the invention

Pneumatic rubber passenger tires are composed of elements which conventionally include a tread of a rubber composition. The tread rubber is conventionally compounded to provide reasonable passenger comfort wear and traction.

However, in passenger tires for vehicular transportation it has become increasingly important to improve the energy efficiency of the tire by reducing its rolling resistance. Such a reduction would desirably reduce required vehicular engine fuel, thereby providing an energy savings.

Although it is desired to compound the tire's tread composition to reduce the rolling resistance of the tire without substantially degrading the wear and traction features of the tire itself, usually traction is often expected to be somewhat reduced as may be evidenced by a decrease in wet skid resistance of the tire.

Therefore, it is desirably to provide a pneumatic tire having a relatively low rolling resistance with a tread which provides reasonable traction.

Disclosure and practice of the invention

In accordance with this invention, a pneumatic rubber tire having a sulfur vulcanized rubber tread composition containing carbon black, zinc oxide, cure accelerator, fatty acid and/or metal salt thereof, and rubber processing oil; wherein said tread composition also contains about 2 to about 15 phr of a ring-opened polymerized dicyclopentadiene resin characterized by having a softening point in the range of about 95°C to about 120°C; where said resin is composed of at least 90 percent of repeating units having the following ring opened type of structure:

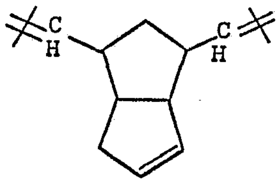

Preferably, such tread composition is comprised of diene rubber, about 60 to about 90 phr carbon black, about 2 to about 5 phr zinc oxide, about 2 to about 5 phr stearic acid and/or zinc stearate, cure accelerator in the range of about 0.5 to about 2.5 phr.

Such tread rubber composition is considered to be general in nature and selection and quantity of ingredients may be optimized for special applications. However, it is considered that the particular type of poly(dicyclopentadiene) in the composition is a departure from accepted practice.

Conventional poly(dicyclopentadiene) resins are well known. They contain a much lower content of unsaturated carbon-to-carbon double bonds that the resins used in this invention. They thus differ significantly from the ring-opened polymerized monomer and are complex materials understood to be composed primarily of repeating units having the structure:

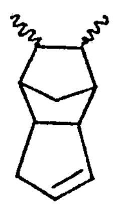

It is important to appreciate that the poly(dicyclopentadiene), in effect, replaces about 5 to about 20 phr of the normally desired processing oil. In other words, if the dicyclopentadiene resin were not used, it would be expected that an amount of processing oil would be increased by about 5 to about 20 phr. Often, the dicyclopentadiene resin, in a sense, replaces a part of the processing oil on the basis of about 0.5/1 to about 1/1 parts by weight resin per part by weight replaced oil.

The invention is particularly applicable to pneumatic tires having a generally toroidal shape with two spaced, essentially inextensible beads, outer tread adapted to be ground-contacting, sidewalls contacting said beads and tread and a supporting carcass.

The term "pneumatic tire" is used herein to refer to tires of both the pneumatic and semi-pneumatic type. Conventionally, pneumatic tires rely upon an internal air pressure to maintain its shape when mounted on a rim and placed under load, whereas a semi-pneumatic tire, although containing a gas such as air which might be under pressure in the tire cavity, it does not completely rely upon the gas for support of the tire itself.

A measure of the energy absorbed by a cured rubber sample being deflected under compression force as the difference between energy applied to compress the rubber and energy expended by the sample as it rebounds has been found to be an important value in evaluating its ability to provide a tire tread which will reduce the tire's rolling resistance.

Such a measure or property of the rubber sample can be referred to as its loss compliance value. The loss compliance value relates to energy absorbed, under test, at a constant stress amplitude. Under such test, a block of cured compounded rubber is displaced at a relatively rapid frequency under continuous compression.

It has been observed that cured rubber compositions with similar loss compliance values, when used as tire tread composites, generally provide tires with similar rolling resistance characteristics. It has been observed that a decrease of the loss compliance value (less energy absorbed) for a tread composition, the lower the rolling resistance value becomes for the corresponding tire.

However, it should be appreciated that reduced tire rolling resistance accomplished by using a tread rubber of reduced loss compliance value is considered to potentially reduce the tire's traction, or wet skid resistance.

Tire tread traction is conventionally measured or evaluated by the tire's dry and/or wet skid resistance. The wet skid resistance is considered to be a more sensitive measure of traction than dry skid resistance.

It is an important feature of this invention that it has been observed that adding the required poly(dicyclopentadiene) resin to a tread rubber composition (in effect replacing part of its oil), can provide a tire with a relatively low rolling resistance while also providing a good wet skid resistance.

The dicyclopentadiene resin used in this invention can conveniently be prepared by ring-open polymerizing dicyclopentadiene in the presence of a suitable catalyst such as tungsten hexachloride with an appropriate cocatalyst such as, for example, tetrabutyl tin. Usually an organic solvent is used such as benzene, toluene or cyclohexane and its molecular weight can be regulated by a conventional ring-opening polymerization process such as with an acyclic olefin, for example, l-hexene.

Various carbon blacks can be used for purpose of this invention representative of which are, for example, intermediate super abrasion furnace black (N220) sometimes referred to as ISAF, super abrasion furnace black (N110) sometimes referred to as SAF, and high abrasion furnace black (N330) sometimes referred to as HAF.

Various oils compatible with rubber typically used but which are at least in part, replaced by the dicyclopentadiene resin are generally referred to as rubber processing oils. Representative of such oils are paraffinic, naphthenic, aromatic aromatic, pine tar and synthetic oils. Tread stock of compounded rubber generally utilizes a synthetic rubber processing oil of the aromatic/naphthenic type.

It is understood in the practice of this invention that in the compounding of the rubber various conventional materials can be used such as antioxidants, antiozonants, accelerators, fillers, plasticizers and the like.

The invention is illustrated by the accompanying drawing which is a perspective view of a vehicular rubber tire 1 with a cut-away section showing a cross-section of its tread 2, sidewalls 3 and supporting carcass plies 4. The tire is shown as being mounted on a rim 5 and inflated. The tread 2 is of the compounded rubber required by this invention, which may extend into the shoulder of the sidewall 3, in order to provide a mounted and inflated tire having good rolling resistance and traction. The thickness of the rubber tread composition on the tire can vary over a reasonably considerable range depending upon a number of factors including the actual size of the tire and its intended use.

The tire has a sulfur vulcanized rubber tread composition comprising 60 to 90 phr carbon black, 2 to 5 phr zinc oxide, 2 to 5 phr stearic acid and/or zinc stearate, cure accelerator in the range of 0.5 to 2 phr and, on a basis prior to curing the rubber sulfur in the range of about 0.5 to 2.5 phr, rubber processing oil/and 2 to 15 phr of a ring-opened polymerized dicyclopentadiene resin characterized by having a softening unit in the range of 95°C to 120°C, and more preferably the tread composition contains 3 to 10 phr of dicyclopentadiene resins composed of at least 90 percent of repeating units having the ring-opened type of structure illustrated on Page 2.

The practice of this invention is further illustrated by reference to the following example which is intended to be representative rather than restrictive of the scope of the invention. Unless otherwise indicated, all parts and percentages are by weight.

Example

Rubber compositions were formulated to prepare an extruded tread stock comprised of the general recipe shown in Table 1. In Table 1 formulation A is experimental and represents the practice of this invention. In formulation B, a control comprised of a more conventional formulation is shown.

Pneumatic tires of conventional construction (grooved tread, sidewalls, spaced beads, and supporting fabric-reinforced carcass) were built, shaped and cured in a conventional tire mold. The tire were identified as Custom Polysteel BR78—13 passenger tires which indicate that they had a radial ply polyester core-reinforced carcass with circumferential steel cord belts, similar to the drawing in this specification, except that the simplified drawing does not illustrate the belts and shows only simple grooves for the tread.

The tread rubber compound of the conventional control sample and experiment (B) was composed of

30 parts polybutadiene rubber and 96.25 parts butadiene/styrene rubber which contained about 26.25 parts aromatic-type rubber processing oil. Thus, 70 parts butadiene/styrene rubber was used.

TABLE 1

| Components | (Experimental) A | (Control) B |
|---|---|---|
| Polybutadiene rubber | 30.00 | 30.00 |
| Butadiene/styrene rubber, oil extended (26.25 parts oil) | 96.25 | 96.25 |
| Poly(dicyclopentadiene)resin[1] | 4.0 | —— |
| Carbon black (ISAF) | 70.00 | 70.00 |
| Waxes | 3.00 | 3.00 |
| Processing oil | 3.00 | 9.00 |
| Antioxidant | 2.00 | 2.00 |
| Accelerator | 1.00 | 1.00 |
| Zinc oxide | 3.00 | 3.00 |
| Sulfur | 1.75 | 1.75 |

[1] Poly(dicyclopentadiene) of the ring-opened polymerization type having a softening point of about 105°C.

The compounds (A and B) shown in Table 1 were mixed, extruded and applied to a radial ply rubber tire carcass and accompanying sidewalls. The tires A and B corresponding to tread compounds A and B were molded through shaping and curing under pressure to form the resulting vehicular tires.

Samples of such compounded rubber (A and B) were cured and tested and found to have a loss compliance of essentially equal values. The results of the test are shown in Table 3.

TABLE 3
(Loss compliance values)

| Temperature of test (°C) | Experimental composition (A) | Control composition (B) |
|---|---|---|
| 27 | .0190 | .0199 |
| 38 | .0215 | .0218 |
| 49 | .0219 | .0224 |
| 60 | .0244 | .0236 |
| 71 | .0249 | .0247 |
| 82 | .0261 | .0249 |
| 93 | .0255 | .0247 |
| 104 | .0246 | .0244 |
| 116 | .0259 | .0252 |

The tires (A and B) were mounted on rims, inflated and submitted to testing. The test values for the control were normalized to a value of 100 for comparison purposes. The tire (A) with the experimental tread (A) was tested and its test values compared to the values of the control tire (B) and reported relative to the normalized values of 100 for the control as shown in Table 2.

TABLE 2

| Test | Tire test results | |
|---|---|---|
| | Experimental A | Control B |
| Rolling Resistance | 100 | 100 |
| Energy Efficiency | 100 | 100 |
| Traction: | | |
| Wet | 108 | 100 |
| Dry | 100 | 100 |

Thus, the tire with the experimental tread (A) of this invention demonstrated equal rolling resistance with an improvement in wet traction.

The rolling resistance was determined by mounting the tire and allowing it to be turned by a 67 inch diameter dynamometer under about 80 percent of its rated load at a rate equivalent to a vehicular speed of 80 kph (50 mph) and the drag force measured. The test is believed to be somewhat standard.

It is to be emphasized that the value for rolling resistance, was equal while improving wet skid resistance. Indeed, the results shown in Table 2 indicate the relative values for rolling resistance (Control B and Experimental A tires) to be 100 while the wet skid resistance of Experimental B tire was actually 108 (a desirably higher resistance) as compared to a normalized value of 100 for the control tire. The wet skid resistance values are considered to be a better and more sensitive test then the dry skid values which remained at a value of 100.

The skid resistance was a standard test in which the tires (A and B) are mounted on an axle of a weighted, drawn trailer at various speeds and brakes of the trailer applied and skid force (peak and slide) measured and compared to a control.

The energy efficiency was compared by actually measuring quantity of fuel used in propelling an automobile using the tire and was noticeably about the same for the two tires.

**Claims**

1. A pneumatic rubber tire having a sulfur vulcanized rubber tread composition containing carbon black, zinc-oxide, cure accelerator, fatty acid and/or metal salt thereof, and rubber processing oil; wherein said tread composition also contains about 2 to about 15 phr of a ring-opened polymerized dicyclopentadiene resin characterized by having a softening point in the range of about 95°C to about 120°C; where said resin is composed of at least 90 percent of repeating units having the following ring opened type of structure:

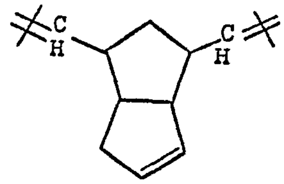

2. The tire of claim 1 where said fatty acid and/or metal salt thereof is stearic acid and/or zinc stearate.

3. The tire of claim 1 having a generally toroidal shape with two spaced, essentially inextensible beads, outer tread adapted to be ground-contacting, sidewalls contacting said beads and tread and a supporting carcass; where its said tread composition is comprised of diene rubber, about 60 to about 90 phr carbon black, about 2 to about 5 phr zinc oxide, about 2 to about 5 phr stearic acid and/or zinc stearate, cure accelerator in the range of about 0.5 to about 2 phr and, on a basis prior to curing the rubber, sulfur in the range of about 0.5 to about 2.5 phr; and where said tread composition contains about 3 to about 10 phr of said dicyclopentadiene resin.

**Patentansprüche**

1. Pneumatischer Kautschukreifen mit einer schwefelvulkanisierten Kautschuklaufflächenmasse, die Ruß, Zinkoxid, Härtungsbeschleuniger, Fettsäure und/oder Metallsalz davon sowie ein Kautschukverarbeitungsöl enthält, wobei die Laufflächenmasse auch ungefähr 2 bis ungefähr 15 phr eines durch Ringöffnung polymerisierten Dicyclopentadienharzes enthält, das durch einen Erweichungspunkt im Bereich von ungefähr 95 bis ungefähr 120°C characterisiert ist, wobei sich das Harz zu wenigstens 90% aus sich wiederholenden Einheiten der folgenden Ringöffnungstypstruktur zusammen setzt.

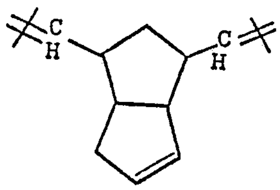

2. Reifen nach Anspruch 1, dadurch gekennzeichnet, daß die Fettsäure und/oder das Metallsalz davon Stearin und/oder Zinkstearat besteht.

3. Reifen nach Anspruch 1 mit einer allgemeinen ringförmingen mit zwei in einem Abstand vorgesehenen im wesentlichen nichtausdehnbaren Wülsten, einer äußeren Lauffläche, die für eine Bodenkontaktierung ausgelegt ist, Seitenwänden, welche die Wülste kontaktieren und einer Lauffläche sowie einer stützenden Karkasse, wobei die Laufflächenzusammensetzung aus einem Dienkautschuk, ungefähr 60 bis ungefähr 90 phr Ruß, ungefähr 2 bis 5 phr Zinkoxid, ungefähr 2 bis ungefähr 5 phr Stearinsäure und/oder Zinkstearat, einem Härtungsbeschleuniger in einem Bereich von ungefähr 0,5 bis ungefähr 2 phr und vor der Härtung des Kautschuks aus Schwefel in einer Menge von ungefähr 0,5 bis ungefähr 2,5 phr besteht, und wobei die Laufflächenmasse ungefähr 3 bis ungefähr 10 phr des erwähnten Dicyclopentadienharzes enthält.

## Revendications

1. Bandage pneumatique en caoutchouc comportant une composition de caoutchouc vulcanisé au soufre pour bande de roulement contenant du noir de carbone, de l'oxyde de zinc, un accélérateur de vulcanisation, un acide gras et/ou un sel métallique d'un acide gras, ainsi qu'une huile de traitement du caoutchouc, cette composition pour bande de roulement contenant également environ 2 à environ 15 parties (par 100 parties de caoutchouc) d'une résine de dicyclopentadiène polymérisée avec ouverture du noyau, caractérisée par un point de ramollissement se situant dans l'intervalle allant d'environ 95°C à environ 120°C, cette résine étant constituée d'au moins 90% de motifs périodiques ayant la structure du type à noyau ouvert ci-après:

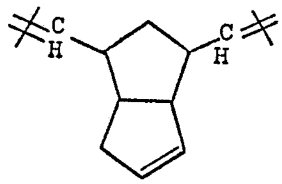

2. Bandage pneumatique selon la revendication 1, caractérisé en ce que l'acide gras et/ou son sel métallique est l'acide stéarique et/ou le stéarate de zinc.

3. Bandage pneumatique selon la revendication 1, ce bandage ayant une forme généralement toroïdale avec deux talons espacés et essentiellement inextensibles, une bande de roulement extérieure destinée à entrer en contact avec le sol, des flancs entrant en contact avec ces talons et cette bande de roulement, ainsi qu'une carcasse support, la composition pour la bande de roulement comprenant un caoutchouc diénique, environ 60 à environ 90 parties (par 100 parties de caoutchouc) de noir de carbone, environ 2 à environ 5 parties (par 100 parties de caoutchouc) d'oxyde de zinc, environ 2 à environ 5 parties (par 100 parties de caoutchouc) d'acide stéarique et/ou de stéarate de zinc, environ 0,5 à environ 2 parties (par 100 parties de caoutchouc) d'un accélérateur de vulcanisation et, avant la vulcanisation du caoutchouc, environ 0,5 à environ 2,5 parties (par 100 parties de caoutchouc) de soufre, cette composition pour bande de roulement contenant environ 3 à environ 10 parties (par 100 parties de caoutchouc) de la résine de dicyclopentadiène.

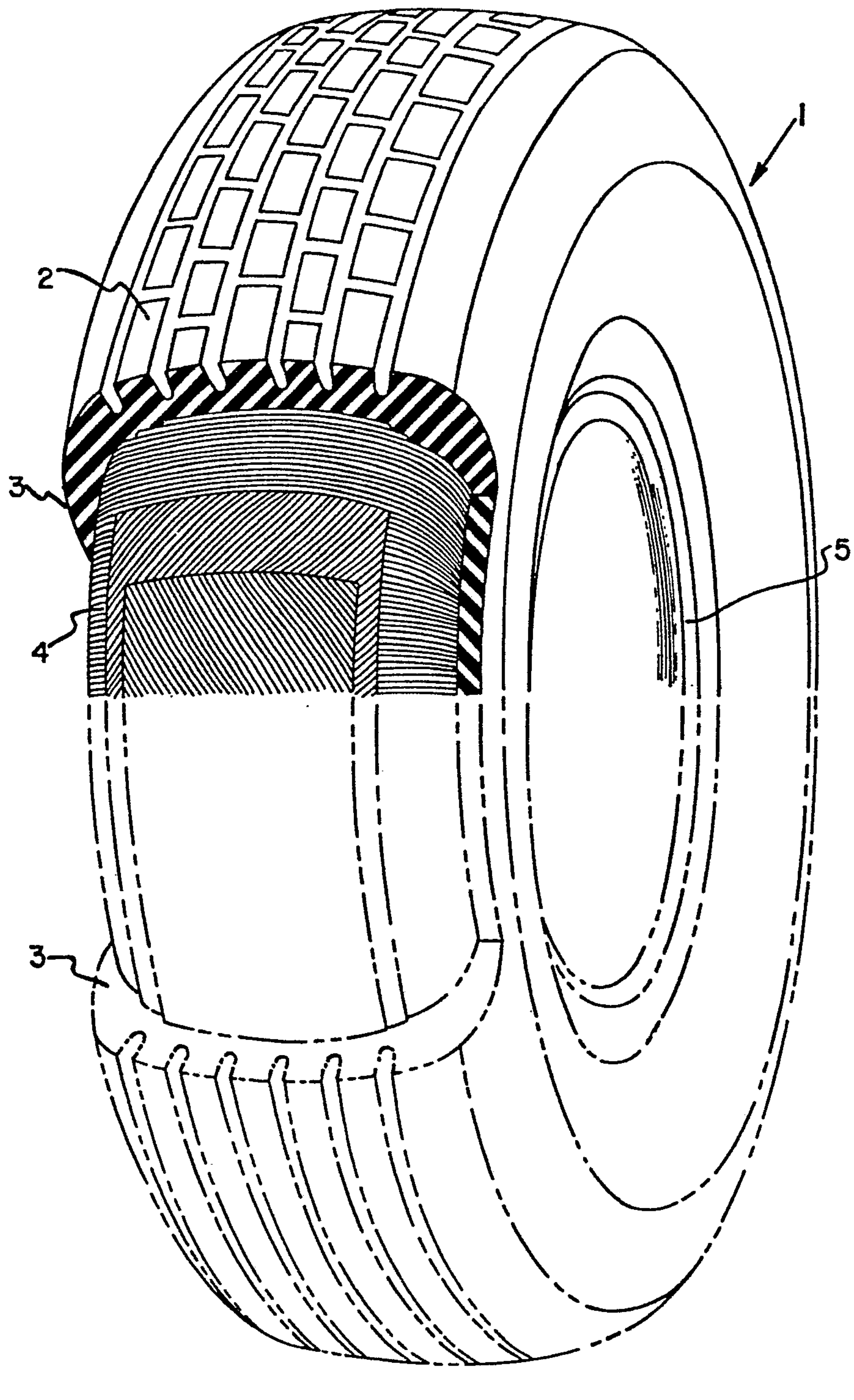
1
2
3
4
5
3